# EUROPÄISCHE PATENTSCHRIFT

(11) **EP 1 389 570 B1**
(45) Veröffentlichungstag und Bekanntmachung des Hinweises auf die Patenterteilung: **30.08.2006**
(21) Anmeldenummer: 03015618.6
(22) Anmeldetag: 16.07.2003
(51) Int. Cl.: B60T 1/087, B60T 10/02

(54) **Vorrichtung und Verfahren zum Betreiben eines hydrodynamischen Retarders**
Device for and method of operating a hydrodynamical retarder
Appareil et méthode d'opération d'un ralentisseur hydrodynamique

(30) Priorität: 20.07.2002 DE 10233133
(43) Veröffentlichungstag der Anmeldung: 18.02.2004
(73) Patentinhaber: ZF FRIEDRICHSHAFEN Aktiengesellschaft, 88038 Friedrichshafen (DE)
(72) Erfinder: Sauter, Frank, 88074 Meckenbeuren (DE); Halter, Jürgen, 88048 Friedrichshafen (DE)

(56) Entgegenhaltungen:
- EP-A- 0 296 728
- DE-A- 4 039 661
- DE-A- 10 054 078
- DE-A- 19 833 892
- DE-A- 19 833 893
- DE-A- 19 850 383
- DE-A- 19 854 787
- US-A- 5 816 665
- US-A- 5 830 105

## Beschreibung

Die vorliegende Erfindung betrifft eine Vorrichtung und ein Verfahren zum Betreiben eines hydrodynamischen Retarders.

Dokument DE 198 33 892 offenbart einen Hydrodynamischen Retarder, wobei das Bremsmoment über ein Steuerventil geregelt wird. Die Befüllung erfolgt über eine Intarderpumper. Bei geringen Fördervolumen der Intarderpumper erfolgt die Befüllung bei Bremsmomentanpaderung durch einen Druckluftbetätigbaren Speicher.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche üVerzögerungseinrichtungen in Form von Retardern und Motorbremsen können dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluß befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Die DE 198 50 383 der Anmelderin offenbart beispielsweise einen hydrodynamischen Retarder, der einem Getriebe in einem Fahrzeug nachgeordnet ist und der einen in einem Retardergehäuse angeordneten Rotor aufweist, der mit einer Rotorwelle verbunden ist, die von einer Abtriebswelle des Getriebes angetrieben wird und der einen Stator aufweist, der im Retardergehäuse angeordnet ist und sich über eine Feststelleinrichtung auf diesem abstützt.

Zur Steuerung werden bei Retardern nach dem Stand der Technik im wesentlichen zwei verschiedene Prinzipien angewandt, welche einen Proportionalmagneten mit Nachfolgeschieber oder Regulierventil benötigen. Zum einen werden pneumatische Steuerungssysteme eingesetzt, bei denen der Steuerdruck des Retarders durch einen Luftdruck direkt auf den Arbeitsmedium- bzw. Ölspiegel eingestellt wird. Nachteilig ist hier das begrenzte Steuerverhalten und die Notwendigkeit einer Arbeitsmedium-Luft-Trennungseinheit sowie das Vorhandensein einer fahrzeugseitigen Pneumatikversorgung.

Zum anderen werden Steuerungen eingesetzt, bei denen der hydraulische Druck durch eine permanent angetriebene Hydraulikpumpe, bevorzugterweise eine Zahnradpumpe, bereitgestellt wird. Nachteilig ist bei diesem Konzept der drehzahlabhängige Volumenstrom der verwendeten Pumpe, was insbesondere bei niedrigen Drehzahlen einen Befüllspeicher und bei hohen Drehzahlen große Ventil- und Strömungsquerschnitte erforderlich macht.

Nach dem Stand der Technik, wie beispielsweise in der DE 198 33 893 der Anmelderin beschrieben, werden Retarder ausschließlich im gesteuerten Betrieb betrieben. Der Fahrer stellt hierbei mittels eines Schalters die gewünschte Bremsleistung ein; er erhält jedoch keine Rückmeldung, ob dieser Wunsch tatsächlich realisiert wurde.

Der vorliegenden Erfindung liegt die Aufgabe zugrunde, ein Verfahren zum Betreiben eines hydrodynamischen Retarders anzugeben, welches die Nachteile des Standes der Technik vermeidet. Insbesondere soll ein effektives Bremsenmanagement realisiert werden. Des weiteren soll eine besonders vorteilhafte Vorrichtung zum Betreiben eines hydrodynamischen Retarders vorgestellt werden.

Diese Aufgabe wird für einVerfahren durch die Merkmale des Patentanspruchs 1 gelöst; eine Vorrichtung zum Betreiben eines hydrodynamischen Retarders ist Gegenstand des Patentanspruchs 7. Weitere Ausgestaltungen, Varianten und Vorteile gehen aus den entsprechenden Unteransprüchen hervor.

Demnach wird vorgeschlagen, das Bremsmoment eines hydrodynamischen Retarders zu regeln. Zu diesem Zweck ist der erfindungsgemäße hydrodynamische Retarder mit einem geeigneten Sensor,der Rückschlüsse auf den Retarderdruck zuläßt, vorzugsweise einem Kraftsensor, einem Drehmomentsensor oder einem Drucksensor ausgestattet, wodurch die Messung des vorhandenen Retarderdrucks bzw. des Bremsmomentes als Istgröße erfolgt.

Im Rahmen der Erfindung ist vorgesehen, den Retarder mittels eines elektrischen Aktuators, beispielsweise mittels eines Elektromotors, über einen Kolben oder eine Membran zu befüllen und den Retarderdruck entweder retardereinlassseitig oder retarderauslassseitig zu steuern oder mit einer geeigneten Signalrückführung über die oben erwähnten Sensoren zu regeln.

Eine vorteilhafte Weiterbildung der Erfindung sieht vor, dass der Retarderdruck über die Stromaufnahme des Aktuators sensiert wird. Dies bedeutet, dass zum Regelbetrieb kein Kraftsensor, Drehmomentsensor oder Drucksensor benötigt wird.

Die erfindungsgemäße Konzeption weist den Vorteil auf, dass durch den Regelbetrieb des Retarders dieser stabiler gegen Systemschwingungen ist. Zudem ist die Wiedereinschaltzeit des Retarders gleich der Ersteinschaltzeit, im Gegensatz zum Stand der Technik, wonach die Wiedereinschaltzeit länger als'die Ersteinschaltzeit ist. Des weiteren wird die Ausschaltzeit des Retarders erheblich verkürzt, da der zurückfahrende Kolben eine Sogwirkung ausübt und somit das Öl aus dem Retarderraum saugt. Dahingegen wird nach dem Stand der Technik das Öl nur durch die Pumpwirkung des Retarders aus dem Retarderkreislauf herausgenommen.

Als weiterer Vorteil erweist sich die Tatsache, dass weniger Bauteile bzw. Komponenten benötigt werden, als bei herkömmlichen Steuerungsvorrichtungen.

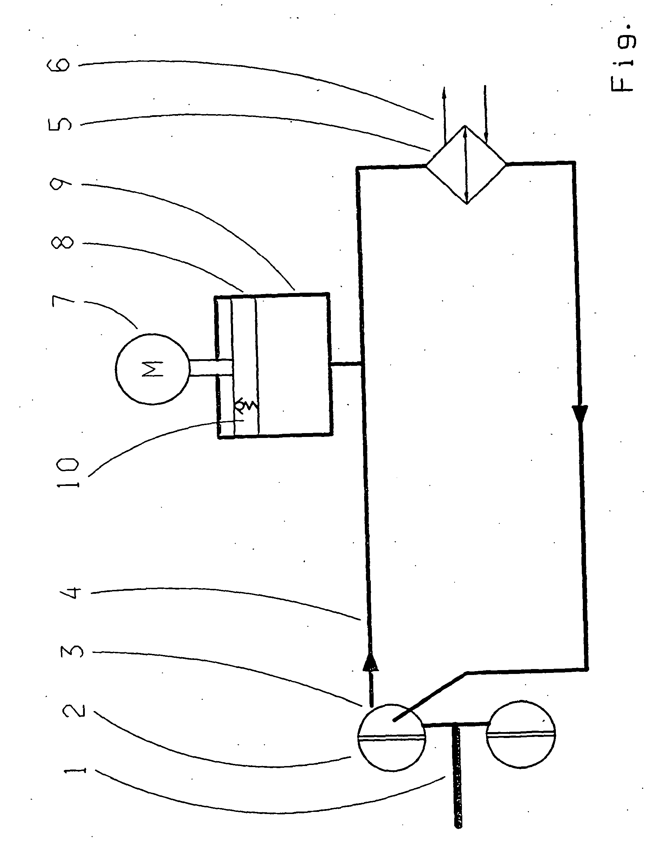

Die Erfindung wird im folgenden anhand der beigefügten Zeichnung, welche den Aufbau der Vorrichtung zum Betreiben eines hydrodynamischen Retarders und den Kreislauf eines erfindungsgemäßen hydrodynamischen Retarders schematisch darstellt, näher erläutert.

In der Zeichnung ist mittels der Pfeile der Kreislauf 4 eines hydrodynamischen Retarders 1 gemäß der Erfindung schematisch dargestellt. Der Retarder 1 umfasst einen Stator 2 und einen Rotor 3. Des weiteren ist ein Wärmetauscher 5 vorgesehen, der bevorzugterweise mit dem Kühlmittelkreislauf 6 des Fahrzeugs verbunden ist, sowie ein elektromotorisch betreibbare Ölspeicher 9. Hierbei kann der Ölspeicher 9 retardereinlass- oder auslassseitig angeordnet sein.

Beim Einschalten des Retarders 1 wird das benötigte Öl zum Befüllen des Retarderraums aus dem Ölspeicher 9 in den hydraulischen Kreislauf 4 gedrückt. Zu diesem Zweck kann in vorteilhafter Weise ein Kolben 8 oder eine Membran eingesetzt werden. Hierbei erfolgt die Verstellung des Kolbens oder der Membran erfindungsgemäß direkt über den Aktuator 7, der vorzugsweise als Elektromotor ausgeführt ist. Alternativ zum Aktuator 7 kann zur Verstellung des Kolbens 8 oder der Membran ein Getriebe eingesetzt werden.

Im Rahmen einer besonders vorteilhaften Weiterbildung ist in den Kolben 8 ein Rückschlagventil 10 integriert, so dass beim Ausschalten des Retarders Lecköl des Kolbens 8 dem Speicher 9 wieder zurückgeführt wird.

Gemäß der Erfindung können der Aktuator, die verwendeten Sensoren und die elektrischen Bauteile, die zur Regelung und/oder Steuerung benötigt werden, zusammengefasst werden.

Die elektrischen Bauteile werden vorteilhaft in Form einer Vor-Ort-Elektronik unmittelbar am Retarder 1 oder in unmittelbarer Nähe zum Retarder 1 angeordnet.

### Bezugszeichen

- 1: hydrodynamischer Retarder
- 2: Stator
- 3: Rotor
- 4: Kreislauf
- 5: Wärmetauscher
- 6: Kühlmittelkreislauf des Fahrzeugs
- 7: Aktuator
- 8: Kolben
- 9: Ölspeicher
- 10: Rückschlagventil

## Patentansprüche

1. Verfahren zum Betreiben eines hydrodynamischen Retarders, **dadurch gekennzeichnet, dass** der Retarder (1) mittels eines elektrischen Aktuators (7) über einen Kolben (8) oder eine Membran befüllt wird, wobei das Bremsmoment bzw. der Retarderdruck retardereinlassseitig oder retarderauslassseitig geregelt wird, und bei der Regelung eine Istgröße des Bremsmomentes bzw. des Retarderdruckes erfaßt wird.

2. Verfahren nach Anspruch 1, **dadurch gekennzeichnet, dass** zum Erfassen der Istgröße bei der Regelung des Bremsmomentes bzw. des Retarderdruckes ein Kraftsensor, ein Drehmomentsensor oder ein Drucksensor eingesetzt wird.

3. Verfahren nach Anspruch 1, **dadurch gekennzeichnet, dass** zum Erfassen der Istgröße bei der Regelung des Bremsmomentes bzw. des Retarderdruckes die Stromaufnahme des Aktuators (7) verwendet wird.

4. Verfahren nach einem der Ansprüche 1 bis 3, **dadurch gekenn- zeichnet, dass** als Aktuator (7) ein Elektromotor verwendet wird.

5. Verfahren nach einem der Ansprüche 1 bis 4, **dadurch gekenn- zeichnet**, **dass** beim Ausschalten des Retarders (1) Lecköl des Kolbens (8) dem Speicher (9) über ein Rückschlagventil (10) zurückgeführt wird.

6. Vorrichtung zum Betreiben eines hydrodynamischen Retarders, **dadurch gekennzeichnet, dass** sie einen über einen elektrischen Aktuator (7) betreibbaren Ölspeicher (9) umfasst, wobei zum Betreiben des Ölspeichers (9) ein Kolben (8) oder eine Membran vorgesehen ist, der bzw. die von dem Aktuator (7) verstellbar ist, und die Vorrichtung einen Kraftsensor, einen Drehmomentsensor oder einen Drucksensor umfasst zum Erfassen der lstgröße für ein Bremsmoment bzw. einen Retarderdruck des Retarders (1).

7. Vorrichtung nach Anspruch 6, **dadurch gekennzeichnet, dass** als Aktuator (7) ein Elektromotor vorgesehen ist.

8. Vorrichtung nach einem der Ansprüche 6 und 7, **dadurch ge- kennzeichnet, dass** in den Kolben (8) ein Rückschlagventil (10) integriert ist, so dass beim Ausschalten des Retarders (1) Lecköl des Kolbens (8) zum Speicher (9) zurückführbar ist.

9. Vorrichtung nach einem der Ansprüche 6 bis 8, **dadurch ge- kennzeichnet, dass** der Ölspeicher (9) retardereinlass- oder auslassseitig angeordnet ist.

10. Vorrichtung nach einem der Ansprüche 6 bis 9, **dadurch ge- kennzeichnet, dass** sie einen Wärmetauscher (5) umfasst:

11. Vorrichtung nach Anspruch 10, **dadurch gekennzeichnet, dass** der Wärmetauscher (5) mit dem Kühlmittelkreislauf (6) des Fahrzeugs verbunden ist.

## Claims

1. The invention concerns a method for operating a hydrodynamic retarder, **characterized in that** the retarder is filled by means of an electric actuator (7) via a piston (8) or a membrane, with the brake torque or retarder pressure being controlled either on the inlet or on the outlet end of the retarder and an actual size of the brake torque or retarder pressure being registered during control.

2. A method according to claim 1, **characterized in that** a force sensor, a torque sensor or a pressure sensor is used to register the actual size during control of the brake torque or the retarder pressure.

3. A method according to claim 1, **characterized in that** the power consumption of the actuator (7) is used to register the actual size during control of the brake torque or the retarder pressure.

4. A method according to one of the claims 1 through 3, **characterized in that** an electric motor is used as an actuator (7).

5. A method according to one of the claims 1 through 4, **characterized in that** deactivation of the retarder (1) results in leak oil of the piston (8) being returned to the reservoir (9) via a check valve (10).

6. A device for operating a hydrodynamic retarder, **characterized in that** it comprises an oil reservoir (9), which can be operated via an electric actuator (7); with a piston (8) or a membrane being provided for operating the oil reservoir (9), either of which can be adjusted by the actuator (7); and that the device comprises a force sensor, a torque sensor or a pressure sensor to register the actual size for a brake torque or a retarder pressure of the retarder (1).

7. A device according to claim 6, **characterized in that** an electric motor is provided as actuator (7).

8. A device according to one of the claims 6 and 7, **characterized in that** a check valve (10) is integrated within the piston (8), so that after deactivation of the retarder (1), leak oil of the piston (8) can be returned to the reservoir (9). -

9. A device according to one of the claims 6 through 8, **characterized in that** the oil reservoir (9) is arranged either on the inlet or the outlet side of the retarder.

10. A device according to one of the claims 6 through 9, **characterized in that** it comprises a heat exchanger (5).

11. A device according to claim 10, **characterized in that** the heat exchanger (5) is connected to the coolant circuit (6) of the vehicle.

## Revendications

1. Méthode d'actionnement d'un ralentisseur hydrodynamique, **caractérisée en ce que** le ralentisseur (1) est rempli à l'aide d'un actionneur électrique (7) par un piston (8) ou un diaphragme, sachant que le couple de freinage et/ou la pression du ralentisseur est réglée côté entrée ralentisseur ou sortie ralentisseur et **en ce que** lors du réglage est enregistrée une grandeur réelle du couple de freinage et/ou de la pression du ralentisseur.

2. Méthode selon la revendication 1, **caractérisée en ce que** pour l'enregistrement de la grandeur réelle, lors du réglage du couple de freinage et/ou de la pression du ralentisseur est utilisé un capteur de force, un capteur de couple ou un capteur de pression.

3. Méthode selon la revendication 1, **caractérisée en ce que** pour l'enregistrement de la grandeur réelle, lors du réglage du couple de freinage et/ou de la pression du ralentisseur est utilisé le courant absorbé de l'actionneur (7).

4. Méthode selon une des revendications 1 à 3, **caractérisée en ce que** en tant qu'actionneur (7) est utilisé un moteur électrique.

5. Méthode selon une des revendications 1 à 4, **caractérisée en ce que** lors de la coupure du ralentisseur (1) l'huile de fuite du piston (8) est refoulée à l'accumulateur (9) par l'intermédiaire d'un clapet antiretour (10).

6. Dispositif d'actionnement d'un ralentisseur hydrodynamique, **caractérisé en ce qu'**il comprend un accumulateur d'huile (9) actionnable par l'intermédiaire d'un actionneur électrique (7), sachant que pour l'actionnement de l'accumulateur d'huile (9) est prévu un piston (8) ou un diaphragme, qui peuvent être réglés par un actionneur (7), et **en ce que** le dispositif comprend un capteur de force, un capteur de couple ou un capteur de pression pour l'enregistrement de la grandeur réelle d'un couple de freinage et/ou d'une pression du ralentisseur (1).

7. Dispositif selon la revendication 6, **caractérisé en ce que** en tant qu'actionneur (7) est prévu un moteur électrique.

8. Dispositif selon une des revendications 6 et 7, **caractérisé en ce que** dans le piston (8) est intégré un clapet antiretour (10), permettant de refouler lors de la coupure du ralentisseur (1) l'huile de fuite du piston (8) à l'accumulateur (9).

9. Dispositif selon une des revendications 6 à 8, **caractérisé en ce que** l'accumulateur d'huile (9) est disposé du côté entrée et du côté sortie du ralentisseur.

10. Dispositif selon une des revendications 6 à 9, **caractérisé en ce qu'**il comprend un échangeur thermique (5).

11. Dispositif selon la revendication 10, **caractérisé en ce que** l'échangeur thermique (5) est lié au circuit de refroidissement (6) du véhicule.
